# EUROPEAN PATENT SPECIFICATION

(11) **EP 3 999 571 B1**
(45) Date of publication and mention of the grant of the patent: **17.07.2024**
(21) Application number: 20844978.5
(22) Date of filing: 17.07.2020
(51) Int. Cl.: C08G 59/62, C08G 59/68, C08K 5/13, C08L 63/00, C08L 61/12, C09D 163/00, C09D 5/03

(54) **PHENOLIC HARDENER FOR EPOXY POWDER COATINGS**
PHENOLISCHER HÄRTER FÜR EPOXIDPULVERBESCHICHTUNGEN
DURCISSEUR PHÉNOLIQUE POUR REVÊTEMENTS EN POUDRE ÉPOXY

(30) Priority: 19.07.2019 US 201962876248 P
(43) Date of publication of application: 25.05.2022
(73) Proprietor: Blue Cube IP LLC, Clayton, Missouri 63105 (US)
(72) Inventor: SCHROETZ, Markus, 88416 Ochsenhausen (DE); GRUNWALD, Philip, 88400 Biberach/Riss (DE)
(74) Representative: Greaves Brewster LLP
(86) International application number: PCT/US2020/042583
(87) International publication number: WO 2021/016101

(56) References cited:
- WO-A1-2007/144425
- US-A- 5 631 332
- US-A1- 2007 073 009
- US-A1- 2013 023 603
- US-A1- 2016 264 719
- US-A1- 2017 137 664
- US-A1- 2017 166 513

## Description

### BACKGROUND

In conventional processes, epoxy powder coatings are prepared by reacting a solid epoxy resin with a hardener that comprises a low to medium molecular weight adduct of bisphenol A ("BPA") with a liquid epoxy resin (which often contain monomeric BPA). These conventional processes will often result in solid powder coatings that contain measurable amounts of unreacted BPA.

In light of increasing health concerns involving BPA and the related regulations adopted by government agencies worldwide, it is desirable to provide a solid composition useful as a hardener for epoxy resins having a reduced content of unreacted BPA. US2007/073009 A1 discloses in claim 1 hardeners for water-based epoxy resin systems providing a longer resin pot life, the hardeners being obtainable by (i) reacting a mixture of (A) at least one epoxidized polyalkylene oxide (A) selected from the group of epoxidized polyethylene oxides, epoxidized polypropylene oxides and polyethylene propylene oxides, (B) at least one epoxidized aromatic hydroxy compound (B) selected from the group of bisphenol A epoxides and bisphenol F epoxides; (C) at least one aromatic hydroxy compound (C) selected from the group of bisphenol A and bisphenol F.

Phenol novolac resins and processes for their preparations are well known and are naturally free of BPA. Unfortunately, the use of hardeners derived from novolac resins often results in products that have an undesirably low melting point, are too highly functionalized, or both, and are therefore unfavorable for use as a powder coating.

It is therefore desirable to provide a solid composition useful as a hardener for epoxy resins, wherein the composition has a reduced content of unreacted BPA as compared to conventional hardeners, but wherein the composition does not suffer from the drawbacks commonly associated with the use of novolac derived hardeners.

### SUMMARY

Provided herein is a solid hardener composition comprising the reaction product of (a) a novolac resin component, (b) an epoxy resin, and (c) an epoxidized polyalkylene glycol.

Also provided herein is a method of preparing a hardener composition, the method comprising (1) forming a reaction mixture comprising (a) a novolac resin component, (b) a liquid epoxy resin, and (c) an epoxidized polyalkylene glycol, and (2) isolating the reaction product of the reaction mixture.

Also provided herein is a curable composition comprising at least one epoxy resin and a hardener composition as described herein.

These and other aspects of the present disclosure are described in further detail below.

### DETAILED DESCRIPTION

Provided herein are solid hardener compositions comprising the reaction product of (a) a novolac resin, (b) an epoxy resin, and (c) an epoxidized polyalkylene glycol. In preferred embodiments, the solid hardener composition comprises an adduct of components (a), (b), and (c). In some embodiments, the solid hardener may be derived from a reaction mixture that further comprises (d) one or more additional components, which will be described in further detail below

### (a) Novolac Resin

Component (a) of the hardener composition comprises at least one novolac resin. For example, the novolac resin may be selected from the group consisting of phenol novolac resins, cresol novolac resins, resorcinol novolac resins, and mixtures thereof.

Novolac resins are a category of phenolic resins prepared by the acid catalyzed reaction of a phenol, such as phenol, o-cresol, m-cresol, p-cresol or the like, with an aldehyde. Non-limiting examples of novolac resins include phenol novolac resins, cresol novolac resins (e.g., o-cresol, m-cresol, or p-cresol novolac resins), and resorcinol novolac resins.

Examples of aldehydes that may be used to prepare novolac resins include aliphatic aldehydes such as formaldehyde, acetaldehyde, butyraldehyde or glyoxal; unsaturated aliphatic aldehydes such as acrolein; aromatic aldehydes such as benzaldehyde or hydroxybenzaldehyde; and unsaturated aromatic aldehydes such as cinnamaldehyde. Non-limiting examples, which may be used alone or in combination, include formaldehyde, paraformaldehyde, trioxane, acetaldehyde, propionaldehyde, butyraldehyde, trimethylacetaldehyde, acrolein, crotonaldehyde, cyclohexanecarbaldehyde, furfural, furylacrolein, benzaldehyde, terephthalaldehyde, phenylacetaldehyde, α-phenylpropylaldehyde, β-phenylpropylaldehyde, o-hydroxybenzaldehyde, m-hydroxybenzaldehyde, p-hydroxybenzaldehyde, o-methylbenzaldehyde, m-methylbenzaldehyde, p-methylbenzaldehyde, o-chlorobenzaldehyde, m-chlorobenzaldehyde, p-chlorobenzaldehyde, and cinnamaldehyde. Typically, the aldehyde is formaldehyde.

### (b) Epoxy Resin

Component (b) of the hardener composition can be any well-known epoxy resin. As used herein, the term "epoxy resin" means a composition which possesses one or more vicinal epoxy groups per molecule, i.e. at least one 1,2-epoxy group per molecule. In general, the epoxy resin compound may be a saturated or unsaturated aliphatic, cycloaliphatic, aromatic or heterocyclic compound which possesses at least one 1,2-epoxy group. Such compound can be substituted, if desired, with one or more non-interfering substituents, such as halogen atoms, hydroxy groups, ether radicals, lower alkyls and the like.

The epoxy resins useful in the present invention may include monoepoxides, diepoxides, polyepoxides or mixtures thereof. Illustrative compounds useful in the practice of the instant invention are described in the Handbook of Epoxy Resins by H. E. Lee and K. Neville published in 1967 by McGraw-Hill, New York; and U.S. Pat. No. 4,066,628.

The compound having at least one vicinal epoxy group may comprise a compound having two vicinal epoxy groups. For example, particularly useful compounds which can be used in the practice of the present invention are epoxy resins having the following formula: 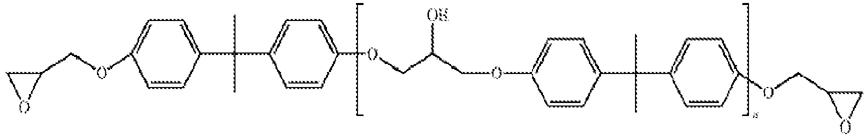 wherein n has an average value of generally 0 or more, preferably from 0 to about 100, and more preferably from about 0.1 to about 50.

The epoxy resins useful in the present invention may include, for example, the glycidyl polyethers of polyhydric phenols and polyhydric alcohols. As an illustration of the present invention, examples of known epoxy resins that may be used in the present invention, include for example, the diglycidyl ethers of resorcinol, catechol, hydroquinone, bisphenol, bisphenol A, bisphenol AP (1,1-bis(4-hydroxylphenyl)-1-phenyl ethane), bisphenol F, bisphenol K, tetrabromobisphenol A, phenol-formaldehyde novolac resins, alkyl substituted phenol-formaldehyde resins, phenol-hydroxybenzaldehyde resins, cresol-hydroxybenzaldehyde resins, dicyclopentadiene-phenol resins, dicyclopentadiene-substituted phenol resins tetramethylbiphenol, tetramethyl-tetrabromobiphenol, tetramethyltribromobiphenol, tetrachlorobisphenol A; and any combination thereof.

Examples of diepoxides particularly useful in the present invention include diglycidyl ether of bisphenol A, diglycidyl ether of bisphenol F, and diglycidyl ether of 2,2-bis(3,5-dibromo-4-hydroxyphenyl) propane (generally referred to as tetrabromobisphenol A). Mixtures of any two or more diepoxides can also be used in the practice of the present invention.

Other diepoxides which can be employed in the practice of the present invention include the diglycidyl ethers of dihydric phenols, such as those described in U.S. Pat. Nos. 5,246,751; 5,115,075; 5,089,588; 4,480,082 and 4,438,254; or the diglycidyl esters of dicarboxylic acids such as those described in U.S. Pat. No. 5,171 820. Other suitable diepoxides include for example, αω-diglycidyloxyisopropylidene-bisphenol-based epoxy resins such as those commercially known as D.E.R.^{®} 300 and 600 series epoxy resins, which are available products from Olin Corporation.

The epoxy resins which can be employed in the practice of the present invention also include epoxy resins prepared either by reaction of diglycidyl ethers of dihydric phenols with dihydric phenols or by reaction of dihydric phenols with epichlorohydrin (also known as "taffy resins").

Preferred epoxy resins useful in the present invention include, for example, the diglycidyl ethers of bisphenol A; 4,4'-sulfonyldiphenol; 4,4-oxydiphenol; 4,4'-dihydroxybenzophenone; resorcinol; hydroquinone; 9,9'-bis(4-hydroxyphenyl)fluorene; 4,4'-dihydroxybiphenyl or 4,4'-dihydroxy-α-methylstilbene and the diglycidyl esters of the dicarboxylic acids mentioned previously.

Other useful epoxide compounds which can be used in the practice of the present invention are cycloaliphatic epoxides. A cycloaliphatic epoxide consists of a saturated carbon ring having an epoxy oxygen bonded to two vicinal atoms in the carbon ring for example as illustrated by the following general formula: 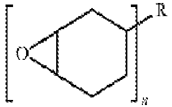 wherein R is a hydrocarbon group optionally comprising one or more heteroatoms (such as, without limitation thereto Cl, Br, and S), or an atom or group of atoms forming a stable bond with carbon (such as, without limitation thereto, Si, P and B) and wherein n is greater than or equal to 1.

The cycloaliphatic epoxide may be a monoepoxide, a diepoxide, a polyepoxide, or a mixture of those. For example, any of the cycloaliphatic epoxide described in U.S. Pat. No. 3,686,359 may be used in the present invention. As an illustration, the cycloaliphatic epoxides that may be used in the present invention include, for example, (3,4-epoxycyclohexyl-methyl)-3,4-epoxy-cyclohexane carboxylate, bis-(3,4-epoxycyclohexyl) adipate, vinylcyclohexene monoxide and mixtures thereof.

The epoxy resin is preferably a liquid epoxy resin. In some embodiments, the epoxy resin may be a semi-solid.

### (c) Epoxidized Polyalkylene Glycol

Component (c) of the hardener composition comprises an epoxidized polyalkylene glycol. Such compounds can be prepared, for example, by reacting a polyalkylene glycol with epichlorohydrin.

Non-limiting examples of polyalkylene glycols include polyethylene glycol, polypropylene glycol, and polybutylene glycol. Reaction of these exemplary compounds with epichlorohydrin as decribed above will yield the diclycidyl ether of polyethylene glycol ("DGEPEG"), the diclycidyl ether of polypropylene glycol ("DGEPPG"), and the diclycidyl ether of polybutylene glycol ("DGEPBG"), respectively. Accordingly, non-limiting examples of epoxidized polyalkylene glycols include DGEPEG, DGEPPG, DGEPBG, and combinations thereof.

### (d) Optional Components

The hardener composition may be derived from a reaction mixture that further comprises one or more optional components. For example, the reaction mixture may comprise a polymerization catalyst (which may also be referred to as an accelerator). A preferred polymerization catalyst is n-methyl morpholine ("NMM").

In some embodiments, the reaction mixture further comprises one or more viscosity modifiers, processing aides, stabilizers, and mixtures thereof.

### Preparation of the Hardener Composition

The hardener composition described herein is a reaction product of (a) a novolac resin, (b) a liquid epoxy resin, and (c) an epoxidized polyalkylene glycol. When the hardener composition is described herein as containing or comprising certain components, it will be understood that the hardener composition is the reaction product of a reaction mixture containing the recited components.

The hardener composition preferably comprises the novolac resin (a) in an amount of from about 20% by weight to about 90% by weight. More preferably, the hardener composition preferably comprises the novolac resin (a) in an amount of from about 50% by weight to about 85% by weight, or even more preferably from about 60% by weight to about 75% by weight.

The hardener composition preferably comprises the liquid epoxy resin (b) in an amount of from about 5% by weight to about 50% by weight. More preferably, the hardener composition preferably comprises the liquid epoxy resin (b) in an amount of from about 5% by weight to about 30% by weight, or even more preferably from about 10% by weight to about 20% by weight.

The hardener composition preferably comprises the epoxidized polyalkylene glycol (c) in an amount of from about 5% by weight to about 50% by weight. More preferably, the hardener composition preferably comprises the epoxidized polyalkylene glycol (c) in an amount of from about 10% by weight to about 35% by weight, or even more preferably from about 15% by weight to about 25% by weight.

As noted above, the hardener composition may further comprise (d) one or more additional components. In some embodiments, the hardener composition comprises a polymerization catalyst (e.g., n-methyl morpholine) in an amount of from about 0.001% by weight to about 2% by weight, more preferably from about 0.01% by weight to about 0.5% by weight.

### Curable Compositions

Also provided herein is a curable composition comprising (I) at least one epoxy resin and (II) a hardener composition as described above. The curable composition may additionally comprise one or more optional additives, as described in further detail below.

### Epoxy Resin

The curable composition comprises an epoxy resin component (I) comprising at least one epoxy resin. The epoxy resin component may comprise any epoxy resin compound known to those skilled in the art. The epoxy resin component may comprise a single epoxy resin compound or a mixture of two or more epoxy compounds used in combination.

The epoxy resin component preferably comprises a solid epoxy resin. In some embodiments, the epoxy resin component may comprise a semi-solid epoxy resin.

Non-limiting examples of epoxy resins include aliphatic epoxy resins, cycloaliphatic epoxy resins, bisphenol A epoxy resins, bisphenol F epoxy resins, phenol novolac epoxy resins, cresol-novolac epoxy resins, biphenyl epoxy resins, polyfunctional epoxy resins, naphthalene epoxy resins, divinylbenzene dioxide, 2-glycidylphenylglycidyl ether, dicyclopentadiene-type epoxy resins, phosphorous containing epoxy resin, multi aromatic resin type epoxy resins, and mixture thereof. Other non-limiting examples of epoxy resins include trimethylpropane epoxide, cyclohexanedimethanol diglycidyl ether, diglycidyl-1,2-cyclohexane dicarboxylate, diglycidyl ether of bisphenol A, diglycidyl ether of bisphenol F, resorcinol diglycidyl ether, triglycidyl ethers of para aminophenols, halogen (for example, chlorine or bromine)-containing epoxy resins such as diglycidyl ether of tetrabromobisphenol A, epoxidized phenol novolac, epoxidized bisphenol A novolac, oxazolidone-modified epoxy resins, epoxy-terminated polyoxazolidones, and mixtures thereof.

Suitable commercially available epoxy resin compounds include D.E.R.^{™} 300 series, the D.E.N.^{™} 400 series, the D.E.R.^{™} 500 series, the D.E.R.^{™} 600 series and the D.E.R.^{™} 700 series of epoxy resins commercially available from Olin Corporation. Other non-limiting examples of epoxy resins may include liquid epoxy resins (LERs), such as D.E.R. 331 (a bisphenol A diglycidyl ether, BADGE), D.E.R. 354 (a bisphenol F diglycidyl ether), D.E.R. 324 (a diluent modified epoxy resin), other low viscosity epoxy resin blends, and other well-known epoxy resins and blends or mixtures of the above known epoxy resins. D.E.R. 324, D.E.R. 330, D.E.R. 331, D.E.R. 332, and D.E.R. 354 are commercially available epoxy resins from Olin Corporation. Other commercially available epoxy resin compounds may include for example BADGE with a molecular weight less than 700. As a non-limiting example, the curable composition may comprise a liquid epoxy resin, such as D.E.R. 331 a diglycidylether of bisphenol A (DGEBPA) having an epoxide equivalent weight of from about 170 to about 190 a viscosity of about 10 Pa-s and a density of about 1.2 g/cc.

### Hardener Composition

The curable composition further comprises a hardener composition (II), which may be selected as described in detail above.

In general, an equivalent ratio of the epoxy resin component (I) to the hardener composition (II) is sufficient to form a coating or a thermoset. The equivalent ratio of the epoxy resin to the hardener composition is such that the epoxy/hardener is in a ratio of about 1 epoxy-equivalent to 1 hydroxyl-equivalent. Preferably, the epoxy-equivalent to hydroxyl-equivalent ratio is from about 1:0.5 to about 1:1.5, more preferably from about 1:0.8 to about 1:1.2, and even more preferably from about 1:0.9 to about 1:1.1. The use of any concentration outside the above ranges is less preferred, as it may weaken the network formed.

### Optional Additives

The coating composition may further comprise one or more optional additives commonly used to prepare thermoset or coating compositions. Non-limiting examples of optional compounds or additives include dispersant additives, deformer additives, flowing additives, catalysts, solvents, fillers, pigments, toughening agents, flexibilizing agents, processing aides, flow modifiers, adhesion promoters, diluents, stabilizers, plasticizers, catalyst de-activators, flame retardants, aromatic hydrocarbon resins, coal tar pitch, petroleum pitch, carbon nanotubes, graphene, carbon black, carbon fibers, or mixtures thereof.

Preferably, the curable composition comprises the optional compounds or additives in an amount of from about 0 wt. % to about 5 wt. %. For example, the amount of the optional compounds or additives may range from about 0 wt. % to about 5 wt. %, from about 0.1 wt. % to about 2.5 wt. %, or from about 0.1 wt. % to about 1 wt. %.

Other objects and features will be in part apparent and in part pointed out hereinafter.

### EXAMPLES

The following non-limiting examples are provided to further illustrate the present disclosure.

### Example 1: General Preparation Method

The following general preparation method was used to prepare the hardener composition of each of the following examples, unless otherwise indicated.

Novolac resin is charged into a reaction vessel and melted at 120°C. Liquid epoxy resin and epoxidized polyalkylene glycol are then added and dissolved. The reaction vessel is cooled to 100 °C, NMM is added, and the temperature is increased 150°C. An exothermic reaction starts, and raises the temperature to 170-180°C. After the exotherm is over, the temperature is maintained at 150°C for 30 minutes, after which the temperature is cooled down to 130°C and the reaction product discharged.

### Example 2: Experimental Compositions

Hardener compositions were prepared using the method described in Example 1 above, and were tested for various properties. The components of each experimental composition are presented in Tables 1a-1d below. The designation (C) indicates a comparative composition, while the designation (I) indicates an inventive composition as provided herein.

D.E.R. 331 is a liquid epoxy resin commercially available from Olin Corporation.

XZ 95380 is a phenol novolac resin commercially available from Olin Corporation.

Phenolite KA1160 and Phenolite KA1163 are cresol novolac resins commercially available from DIC Corporation.

D.E.R. 732 (P) is a polyalkylene diglycidyl ether commercially available from Olin Corporation.

D.E.R. 742 is an aliphatic polyglycidyl ether commercially available from Olin Corporation.

**Table 1a**

| Component | Experimental Hardener Composition | | | | | |
|---|---|---|---|---|---|---|
| | 1 (C) | 2 (C) | 3 (C) | 4 (I) | 5 (C) | 6 (C) |
| D.E.R. 331 | 53.32% | 23.8% | 32.9% | 29.53% | - | - |
| resorcinol | 46.55% | - | 14.36% | | 36.05% | 56.79% |
| XZ95380 | - | 76.08% | 52.58% | 59.03% | - | - |
| Phenolite KA1163 | - | - | - | - | - | |
| Phenolite KA1160 | - | - | - | - | - | - |
| D.E.R. 742 | | | | | | 43.13% |
| D.E.R. 732 (P) | - | - | - | 11.32% | 63.8% | - |
| NMM | 0.13% | 0.12% | 0.16% | 0.12% | 0.15% | 0.08% |
| Total | 100% | 100% | 100% | 100% | 100% | 100% |

**Table 1b**

| Component | Experimental Hardener Composition | | | | |
|---|---|---|---|---|---|
| | 7 (C) | 8 (C) | 9 (I) | 10 (I) | 11 (I) |
| D.E.R. 331 | - | - | 15% | 15% | 15% |
| resorcinol | - | - | - | - | - |
| XZ95380 | 67.26% | 82.73% | 65% | - | - |
| Phenolite KA1163 | - | | - | - | 65% |
| Phenolite KA1160 | - | - | - | 65% | - |
| D.E.R. 742 | 17.14% | | | | |
| D.E.R. 732 (P) | 32.59% | - | 20% | 20% | 20% |
| NMM | 0.15% | 0.13% | 0.1% | 0.1% | 0.1% |
| Total | 100% | 100% | 100.1% | 100.1% | 100.1% |

**Table 1c**

| Component | Experimental Hardener Composition | | | | |
|---|---|---|---|---|---|
| | 12 (I) | 13 (I) | 14 (I) | 15 (C) | 16 (I) |
| D.E.R. 331 | 15% | 25% | 5% | 35% | 28.6% |
| resorcinol | - | - | - | - | - |
| XZ95380 | - | 65% | 65% | 65% | 60% |
| Phenolite KA1163 | | | | | |
| Phenolite KA1160 | 60% | - | - | - | - |
| D.E.R. 742 | | | | | |
| D.E.R. 732 (P) | 25% | 10% | 30% | | 11.4% |
| NMM | 0.1% | 0.1% | 0.1% | 0.1% | 0.1% |
| Total | 100.1% | 100.1% | 100.1% | 100.1% | 100.1% |

**Table 1d**

| Component | Experimental Hardener Composition | | | | |
|---|---|---|---|---|---|
| | 17 (I) | 18 (I) | 19 (I) | 20 (I) | 22 (I) |
| D.E.R. 331 | 21.4% | 32.1% | 20% | 22.9% | 25.7% |
| resorcinol | - | - | - | - | - |
| XZ95380 | 70% | 55% | 65% | 60% | 55% |
| Phenolite KA1163 | - | - | - | - | - |
| Phenolite KA1160 | - | - | - | - | - |
| D.E.R. 742 | | | | | |
| D.E.R. 732 (P) | 8.6% | 12.9% | 15% | 17.1% | 19.3% |
| NMM | 0.1% | 0.1% | 0.1% | 0.1% | 0.1% |
| Total | 100.1% | 100.1% | 100.1% | 100.1% | 100.1% |

### Example 3: Physical Data

The hardener compositions prepared in Example 2 were tested to determine the glass transition temperature ("Tg"), hydroxide equivalent weight ("OHEW"), Metteler Softening Point ("MSP"), and ICI cone/plate viscosity at 150°C. These data are presented in Tables 2a-2d below.

**Table 2a**

| | Experimental Hardener Composition | | | | | |
|---|---|---|---|---|---|---|
| | 1 (C) | 2 (C) | 3 (C) | 4(1) | 5 (C) | 6 (C) |
| Tg [°C] | | | | 57.7 | | 42 |
| OHEQ [g/eq] | 253 | 207 | 219 | 308 | 330 | 201 |
| MSP [°C] | 72.9 | 94 | 87.2 | 111.9 | not solid | 73.2 |
| Viscosity @150°C [mPa·s] | 240 | 920 | 580 | 14720 | 40 | 700 |

**Table 2b**

| | Experimental Hardener Composition | | | | |
|---|---|---|---|---|---|
| | 7 (C) | 8 (C) | 9 (I) | 10 (I) | 11 (I) |
| Tg [°C] | | | | | |
| OHEQ [g/eq] | 221 | 186 | 246 | 325 | 250 |
| MSP [°C] | 73.5 | 92.1 | 85.9 | 95.6 | - |
| Viscosity @150°C [mPa·s] | 220 | 1060 | 760 | 1520 | - |

| **Table 2c** | | | | | |
|---|---|---|---|---|---|
| | Experimental Hardener Composition | | | | |
| | 12 (I) | 13 (I) | 14 (I) | 15 (C) | 16 (I) |
| Tg [°C] | | 58 | 43 | 71.6 | 60 |
| OHEQ [g/eq] | 366 | 263 | | | |
| MSP [°C] | 93.3 | 98.4 | 76.3 | 115.5 | 108.1 |
| Viscosity @150°C [mPa·s] | - | 2120 | 240 | 8320 | 5840 |

**Table 2d**

| | Experimental Hardener Composition | | | | |
|---|---|---|---|---|---|
| | 17 (I) | 18 (I) | 19 (I) | 20 (I) | 22 (I) |
| Tg [°C] | 56 | - | 53 | 56 | 56 |
| OHEQ [g/eq] | | | | | |
| MSP [°C] | 92.1 | - | 92.3 | 96.6 | 111.3 |
| Viscosity @150°C [mPa·s] | 790 | - | 1040 | 2160 | 10880 |

### Example 4: Powder Compositions Using Experimental Hardeners

The hardener compositions prepared in Example 2 were used to prepare solid epoxy powder compositions. The components of each solid epoxy powder composition are presented in Tables 3a and 3b below.

D.E.R. 664 UE is a solid epoxy resin commercially available from Olin Corporation.

D.E.H. 85 is a conventional hardener composition commercially available from Olin Corporation.

Experimental Hardeners 4, 9, 10, 13, and 17 were prepared as described in Example 3 above.

Epicure P101 is an accelerator commercially available from Hexion.

Dyhard MIA-5 is an accelerator commercially available from AlzChem.

Resiflow PL-200 is a flow modifier commercially available from Worlée Chemical.

Benzoine is available as a 98% pure fine chemical from Arcos.

**Table 3**

| Component | Experimental Powder Composition | | | | | |
|---|---|---|---|---|---|---|
| | 1 (C) | 2 (I) | 3 (I) | 4 (I) | 5 (I) | 6 (I) |
| D.E.R. 664 UE | 72.9% | 72.9% | 72.9% | 72.8% | 75.3% | 76.8% |
| D.E.H. 85 | 22.4% | - | - | - | - | - |
| Experimental Hardener 9 | - | 22.4 % | - | - | - | - |
| Experimental Hardener 10 | - | - | 22.4% | - | - | - |
| Experimental Hardener 4 | - | - | - | 22.5% | - | - |
| Experimental Hardener 13 | - | - | - | - | 20% | - |
| Experimental Hardener 17 | - | - | - | - | - | 18.5% |
| Epicure P 101 | 2% | 2% | 2% | - | - | - |
| Dyhard MIA-5 | - | - | - | 2% | 2% | 2% |
| Resiflow PL-200 | 2% | 2% | 2% | 2% | 2% | 2% |
| benzoine | 0.7% | 0.7% | 0.7% | 0.7% | 0.7% | 0.7% |
| Total | 100% | 100% | 100% | 100% | 100% | 100% |

### Example 5: Physical Data

The powder compositions prepared in Example 4 were tested to determine their glass transition temperature and gelation time. These data are presented in Table 4 below.

**Table 4**

| | Experimental Powder Composition | | | | | |
|---|---|---|---|---|---|---|
| | 1 (C) | 2 (I) | 3 (I) | 4 (I) | 5 (I) | 6 (I) |
| geltime [min] | 2 | 4.25 | 1.33 | 1.3 | 2.2 | 2 |
| Tg [°C] | 101.7 | 87.0 | 95.1 | 89.8 | 94.2 | 94.4 |

With respect to the results shown in Table 4, it should be noted that a commercially acceptable gelation time is generally considered to be 8 minutes or. Inventive compositions 2-7, which utilize inventive hardeners free of unreacted BPA, exhibit commercially acceptable gelation times that are comparable to comparative composition 1, which uses a conventional BPA-containing hardener. Inventive compositions 2-7 also each exhibit commercially acceptable glass transition temperatures (i.e., a Tg higher than 85°C).

### Example 6: Powder Coating Properties

The powder compositions prepared in Example 4 were tested to determine properties related to their use as powder coatings. These data are presented in Tables 5a-5d below.

**Table 5a**

| | Powder Composition 1 | | | |
|---|---|---|---|---|
| stoving temp | 160°C | 180°C | 200°C | 220°C |
| layer thickness [µm] | 90 | 80 | 70 | 85 |
| pendulum hardness (Koenig) [sec] | 196 | 150 | 181 | 201 |
| Mandrel bending | - | - | - | - |
| Erichsen Cupping test [mm] | 11 | 12 | 13 | 12 |
| Resistance 50 double rubs acetone | OK | OK | OK | OK |
| Crosshatch | - | - | - | - |

**Table 5b**

| | Powder Composition 2 | | | |
|---|---|---|---|---|
| stoving temp | 160°C | 180°C | 200°C | 220°C |
| layer thickness [µm] | 70 | 80 | 80 | 80 |
| pendulum hardness (Koenig) [sec] | 240 | 169 | 196 | 191 |
| Mandrel bending | - | - | - | - |
| Erichsen Cupping test [mm] | 8.5 | 11 | 12 | 12 |
| Resistance 50 double rubs acetone | not sufficient | OK | OK | OK |
| Crosshatch | - | - | - | - |

**Table 5c**

| | Powder Composition 3 | | | |
|---|---|---|---|---|
| stoving temp | 160°C | 180°C | 200°C | 220°C |
| layer thickness [µm] | 60 | 85 | 80 | 80 |
| pendulum hardness (Koenig) [sec] | 192 | 190 | 202 | 198 |
| Mandrel bending | - | - | - | - |
| Erichsen Cupping test [mm] | 11 | 12 | 12 | 12 |
| Resistance 50 double rubs acetone | OK | OK | OK | OK |
| Crosshatch | - | - | - | - |

**Table 5d**

| | Powder Composition 4 | | Powder Composition 5 | | Powder Composition 6 | |
|---|---|---|---|---|---|---|
| stoving temp | 155°C | 165°C | 155°C | 165°C | 155°C | 165°C |
| layer thickness [µm] | 95 | 95 | 110 | 110 | 110 | 110 |
| pendulum hardness (Koenig) [sec] | 231 | 226 | 232 | 230 | 237 | 230 |
| Mandrel bending | cracked | OK | 1 crack | OK | 4 cracks | OK |
| Erichsen Cupping test [mm] | 11 | 10 | 12 | 13 | 12 | 11 |
| Resistance 50 double rubs acetone | OK | OK | OK | OK | OK | OK |
| Crosshatch | OK | OK | OK | OK | OK | OK |

When introducing elements of the present disclosure or the preferred embodiment(s) thereof, the articles "a", "an", "the", and "said" are intended to mean that there are one or more of the elements. The terms "comprising", "including", and "having" are intended to be inclusive and mean that there may be additional elements other than the listed elements.

In view of the above, it will be seen that several objects of the disclosure are achieved and other advantageous results attained.

As various changes could be made in the above products and methods without departing from the scope of the disclosure, it is intended that all matter contained in the above description shall be interpreted as illustrative and not in a limiting sense.

## Claims

1. A solid hardener composition comprising the reaction product of:
(a) a novolac resin component;
(b) a liquid or semi-solid epoxy resin; and
(c) an epoxidized polyalkylene glycol.

2. The composition of claim 1 wherein the novolac resin is selected from the group consisting of phenol novolac resins, cresol novolac resins, resorcinol novolac resins, and mixtures thereof.

3. The composition of claim 1 or 2 wherein the liquid or semi-solid epoxy resin is selected from the group consisting of the diglycidyl ether of bisphenol A, the diglycidyl ether of bisphenol F, and mixtures thereof.

4. The composition of any one of claims 1 to 3 wherein the epoxidized polyalkylene glycol is selected from the group consisting of the diglycidyl ether of polyethylene glycol, the diglycidyl ether of polypropylene glycol, the diglycidyl ether of polybutylene glycol, and mixtures thereof.

5. The composition of any one of claims 1 to 4 further comprising a polymerization catalyst, wherein the polymerization catalyst comprises n-methyl morpholine.

6. The composition of any one of claims 1 to 5 comprising the novolac resin in an amount of from about 20% by weight to about 90% by weight.

7. The composition of any one of claims 1 to 6 comprising the liquid or semi solid epoxy resin in an amount of from about 5% by weight to about 30% by weight.

8. The composition of any one of claims 1 to 7 comprising the epoxidized polyalkylene glycol in an amount of from about 10% by weight to about 35% by weight.

9. The composition of any one of claims 1 to 8 comprising a polymerization catalyst in an amount of from about 0.001% by weight to about 2% by weight.

10. A curable composition comprising:
(a) at least one solid or semi-sold epoxy resin; and
(b) a hardener composition as set forth in any one of claims 1 to 9.

11. The curable composition of claim 10 wherein the equivalent ratio of the solid or semi-solid epoxy resin to the hardener composition is from about 1:0.5 to about 1:1.5.

12. The curable composition of claim 11 wherein the solid or semi-solid epoxy resin is selected from the group consisting of the diglycidyl ether of bisphenol A, the diglycidyl ether of bisphenol F, and mixtures thereof.

13. The curable composition of claim 11 wherein the solid or semi-solid epoxy resin comprises a novolac epoxy resin.

14. A method of preparing a hardener composition, the method comprising:
forming a reaction mixture comprising:
(a) a novolac resin component;
(b) a liquid or semi solid epoxy resin; and
(c) an epoxidized polyalkylene glycol;
and isolating the reaction product of the reaction mixture.

15. The method of claim 14 wherein said reaction product is a solid or semi-solid.

## Patentansprüche

1. Feste Härterzusammensetzung, die das Reaktionsprodukt von Folgendem umfasst:
(a) einer Novolakharzkomponente;
(b) einem flüssigen oder halbfesten Epoxidharz; und
(c) einem epoxidierten Polyalkylenglycol.

2. Zusammensetzung nach Anspruch 1, wobei das Novolakharz aus der Gruppe ausgewählt ist, die aus Phenol-Novolakharzen, Kresol-Novolakharzen, Resorcinol-Novolakharzen und Gemischen davon besteht.

3. Zusammensetzung nach Anspruch 1 oder 2, wobei das flüssige oder halbfeste Epoxidharz aus der Gruppe ausgewählt ist, die aus dem Diglycidylether von Bisphenol A, dem Diglycidylether von Bisphenol F und Gemischen davon besteht.

4. Zusammensetzung nach einem der Ansprüche 1 bis 3, wobei das epoxidierte Polyalkylenglycol aus der Gruppe ausgewählt ist, die aus dem Diglycidylether von Polyethylenglycol, dem Diglycidylether von Polypropylenglycol, dem Diglycidylether von Polybutylenglycol und Gemischen davon besteht.

5. Zusammensetzung nach einem der Ansprüche 1 bis 4, die ferner einen Polymerisationskatalysator umfasst, wobei der Polymerisationskatalysator n-Methylmorpholin umfasst.

6. Zusammensetzung nach einem der Ansprüche 1 bis 5, die das Novolakharz in einer Menge von etwa 20 Gew.-% bis etwa 90 Gew.-% umfasst.

7. Zusammensetzung nach einem der Ansprüche 1 bis 6, die das flüssige oder halbfeste Epoxidharz in einer Menge von etwa 5 Gew.-% bis etwa 30 Gew.-% umfasst.

8. Zusammensetzung nach einem der Ansprüche 1 bis 7, die das epoxidierte Polyalkylenglycol in einer Menge von etwa 10 Gew.-% bis etwa 35 Gew.-% umfasst.

9. Zusammensetzung nach einem der Ansprüche 1 bis 8, die einen Polymerisationskatalysator in einer Menge von etwa 0,001 Gew.-% bis etwa 2 Gew.-% umfasst.

10. Aushärtbare Zusammensetzung, die Folgendes umfasst:
(a) mindestens ein festes oder halbfestes Epoxidharz; und
(b) eine Härterzusammensetzung gemäß einem der Ansprüche 1 bis 9.

11. Aushärtbare Zusammensetzung nach Anspruch 10, wobei das Äquivalentverhältnis des festen oder halbfesten Epoxidharzes zu der Härterzusammensetzung etwa 1:0,5 bis etwa 1:1,5 beträgt.

12. Aushärtbare Zusammensetzung nach Anspruch 11, wobei das feste oder halbfeste Epoxidharz aus der Gruppe ausgewählt ist, die aus dem Diglycidylether von Bisphenol A, dem Diglycidylether von Bisphenol F und Gemischen davon besteht.

13. Aushärtbare Zusammensetzung nach Anspruch 11, wobei das feste oder halbfeste Epoxidharz ein Novolak-Epoxidharz umfasst.

14. Verfahren zum Herstellen einer Härterzusammensetzung, wobei das Verfahren Folgendes umfasst:
Ausbilden eines Reaktionsgemisches, das Folgendes umfasst:
(a) eine Novolakharzkomponente;
(b) ein flüssiges oder halbfestes Epoxidharz; und
(c) ein epoxidiertes Polyalkylenglycol;
und Isolieren des Reaktionsprodukts des Reaktionsgemisches.

15. Verfahren nach Anspruch 14, wobei das Reaktionsprodukt ein Feststoff oder Halbfeststoff ist.

## Revendications

1. Composition de durcisseur solide comprenant le produit de réaction de :
(a) un composant résine novolaque ;
(b) une résine époxy liquide ou semi-solide ; et
(c) un polyalkylène glycol époxydé.

2. Composition de la revendication 1, ladite résine novolaque étant choisie dans le groupe constitué des résines novolaques phénoliques, des résines novolaques crésol, des résines novolaques résorcinol et des mélanges de celles-ci.

3. Composition de la revendication 1 ou 2, ladite résine époxy liquide ou semi-solide étant choisie dans le groupe constitué de l'éther diglycidylique du bisphénol A, de l'éther diglycidylique du bisphénol F et de leurs mélanges.

4. Composition de l'une quelconque des revendications 1 à 3, ledit polyalkylène glycol époxydé étant choisi dans le groupe constitué de l'éther diglycidylique du polyéthylène glycol, de l'éther diglycidylique du polypropylène glycol, de l'éther diglycidylique du polybutylène glycol et des mélanges de ceux-ci.

5. Composition de l'une quelconque des revendications 1 à 4, comprenant en outre un catalyseur de polymérisation, ledit catalyseur de polymérisation comprenant de la n-méthylmorpholine.

6. Composition de l'une quelconque des revendications 1 à 5, comprenant la résine novolaque en une quantité allant d'environ 20 % en poids à environ 90 % en poids.

7. Composition de l'une quelconque des revendications 1 à 6, comprenant la résine époxy liquide ou semi-solide en une quantité allant d'environ 5 % en poids à environ 30 % en poids.

8. Composition de l'une quelconque des revendications 1 à 7, comprenant le polyalkylène glycol époxydé en une quantité allant d'environ 10 % en poids à environ 35 % en poids.

9. Composition de l'une quelconque des revendications 1 à 8, comprenant un catalyseur de polymérisation en une quantité allant d'environ 0,001 % en poids à environ 2 % en poids.

10. Composition durcissable comprenant :
(a) au moins une résine époxy solide ou semi-solide ; et
(b) une composition de durcisseur de l'une quelconque des revendications 1 à 9.

11. Composition durcissable de la revendication 10, ledit rapport équivalent de la résine époxy solide ou semi-solide sur la composition de durcisseur allant d'environ 1:0,5 à environ 1:1,5.

12. Composition durcissable de la revendication 11, ladite résine époxy solide ou semi-solide étant choisie dans le groupe constitué de l'éther diglycidylique du bisphénol A, de l'éther diglycidylique du bisphénol F et des mélanges de ceux-ci.

13. Composition durcissable de la revendication 11, ladite résine époxy solide ou semi-solide comprenant une résine époxy novolaque.

14. Procédé de préparation d'une composition de durcisseur, le procédé comprenant :
la formation d'un mélange réactionnel comprenant :
(a) un composant résine novolaque ;
(b) une résine époxy liquide ou semi-solide ; et
(c) un polyalkylène glycol époxydé ;
et l'isolement du produit de réaction du mélange réactionnel.

15. Procédé de la revendication 14, ledit produit de réaction étant un solide ou un semi-solide.
